# EUROPÄISCHE PATENTSCHRIFT

(11) **EP 0 567 822 B1**
(45) Veröffentlichungstag und Bekanntmachung des Hinweises auf die Patenterteilung: **11.10.1995**
(21) Anmeldenummer: 93105851.5
(22) Anmeldetag: 08.04.1993
(51) Int. Cl.: C23C 28/00, B05D 5/08, A47J 36/02

(54) **Verfahren und Vorrichtung zum Beschichten eines metallischen Körpers eines Haus-oder Küchengerätes sowie Verwendung des atmosphärischen Oxidierens einer Oberfläche eines metallischen Körpers**
Process and device for coating the metallic body of a household or kitchen utensil and atmospherically oxidizing a surface of the metallic body
Procédé et dispositif pour revêtir le corps d'un ustensile de ménage ou de cuisine ainsi que l'oxidation atmosphérique d'une surface d'un corps métallique

(30) Priorität: 01.05.1992 DE 4214515
(43) Veröffentlichungstag der Anmeldung: 03.11.1993
(73) Patentinhaber: PTG PLASMA-OBERFLÄCHENTECHNIK GmbH, 72160 Horb (DE)
(72) Erfinder: Heinzel, Winfried, W-7758 Meersburg (DE); Weber, Thomas F., Dr.-Ing., W-4300 Essen 1 (DE)
(74) Vertreter: Witte, Alexander, Dr.-Ing.

(56) Entgegenhaltungen:
- EP-A- 0 236 520
- EP-A- 0 365 485
- DD-A- 284 700
- DD-A- 287 877
- DE-A- 3 604 762
- NO-B- 168 715
- US-A- 4 318 828
- CHEMICAL ABSTRACTS, Band 95, Nr. 12, 21. September 1981, Columbus, Ohio, USA SHARP CORP. "Cooking utensil surfaces" Seite 84, Zusammenfassung-Nr. 99 449z

## Beschreibung

Die Erfindung betrifft ein Verfahren zum Beschichten eines metallischen Körpers eines Haus- oder Küchengerätes, bei dem mittels thermischen Spritzens eine Hartstoffschicht erzeugt und danach eine Antihaftschicht auf die Hartstoffschicht aufgebracht wird und ferner zwischen der Hartstoffschicht und einer Oberfläche des Körpers eine durch Oxidieren des den Körper bildenden Metalles erzeugte Oxidschicht vorgesehen ist.

Die Erfindung betrifft weiterhin eine Vorrichtung zum Beschichten eines metallischen Körpers eines Haus- oder Küchengerätes, bei der mittels thermischen Spritzens eine Hartstoffschicht erzeugt und danach eine Antihaftschicht auf die Hartstoffschicht aufgebracht wird und ferner zwischen der Hartstoffschicht und einer Oberfläche des Körpers eine weitere Schicht vorgesehen ist.

Die Erfindung betrifft schließlich eine Verwendung des atmosphärischen Oxidierens einer Oberfläche eines metallischen Körpers.

Ein Verfahren der eingangs genannten Art ist aus der DD-PS 284 700 bekannt.

Aus der DE-PS 36 04 762 C3 sind ein Verfahren zum Beschichten von Küchengefäßen mit einer Antihaftschicht, ein Küchengefäß mit einer Antihaftschicht sowie eine Anwendung eines Verfahrens zur Herstellung eines mit einer Antihaftschicht beschichteten Pfannenbodens bekannt.

Danach wird zum Erzeugen einer Antihaft-Beschichtung von Pfannen, Töpfen, Backformen und dgl. eine Oberfläche des Küchengefäßes zunächst mit einer Haftgrundschicht aus Nickel-Aluminium oder Chrom-Nickel versehen, alsdann auf die Haftgrundschicht eine Hartstoffschicht aus Aluminiumoxid oder Aluminiumoxid-Titanoxid aufgetragen, weiterhin auf die Hartstoffschicht eine Antihaftschicht, insbesondere auf Polytetrafluorethylen-Basis aufgebracht und schließlich die Antihaftschicht eingebrannt. Sowohl die Haftgrundschicht wie auch die Hartstoffschicht werden dabei im Plasmasprühverfahren aufgebracht und zwar mit einer Dicke von 10 bis 20 µm bzw. zwischen 30 und 60 µm.

Es ist weiterhin bekannt, entsprechende Beschichtungen an Bügeleisensohlen, Warmhalteplatten von Kaffeemaschinen sowie anderen Oberflächen von Haus- und Küchengeräten vorzunehmen, die einerseits einer starken mechanischen Belastung ausgesetzt sind, andererseits gute Antihafteigenschaften aufweisen sollen.

Ein besonders häufiger Anwendungsfall derartiger Beschichtungen ist die Beschichtung von Pfannenböden. Pfannenböden werden nämlich einerseits hohen Temperaturen ausgesetzt, aber auch starken Temperatursprüngen, wenn beispielsweise eine erhitzte Pfanne mit kaltem Wasser ausgespült wird. Weiterhin werden Pfannenböden starken mechanischen Belastungen ausgesetzt, z.B. indem mit Messern, Hebern und dgl. auf dem Pfannenboden gearbeitet wird. Schließlich sind die Antihaft-Anforderungen bei Pfannenböden besonders hoch, wenn z.B. Fleisch oder Eier in der Pfanne gebraten werden und nicht am Pfannenboden haften sollen. Aus diesen Gründen bestehen beim Beschichten von Pfannenböden die strengsten Anforderungen an die Qualität und Dauerhaftigkeit einer Antihaftbeschichtung.

Zum Testen dieser Eigenschaften werden Pfannenböden u.a. auch einem Korrosionstest unterzogen, bei dem der beschichtete Pfannenboden über einen langen Zeitraum von beispielsweise 100 Stunden einer konzentrierten Kochsalzlösung von Raumtemperatur oder erhöhter Temperatur ausgesetzt wird. Wenn sich nach Ablauf dieses Zeitraumes am Pfannenboden auch nur eine sogenannte "Korrosionsblume" ausgebildet hat, wird das entsprechende Teil als Ausschuß verworfen. Neuartige Antihaft-Beschichtungstechniken müssen sich daher an diesen äußerst strengen Kriterien orientieren, um Eingang in die Praxis zu finden.

Angesichts dieser immer strenger werdenden Anforderungen, auch an die Korrosionsbeständigkeit eines derart beschichteten Gerätes, hat sich gezeigt, daß herkömmliche Beschichtungstechniken mitunter nicht mehr die gewünschte Langzeitbeständigkeit gewährleisten können.

Aus der eingangs genannten DD-PS 284 700 ist ein Verfahren zum Beschichten metallischer Oberflächen, insbesondere von Haushaltgeschirr, wie Pfannen, Töpfe und Backformen aus Aluminium und seinen Legierungen, bekannt. Bei dem bekannten Verfahren soll die Haftfestigkeit thermisch gespritzter nichtmetallischer Schutzschichten erhöht werden. Zu diesem Zweck wird der metallische Körper, beispielsweise eines Bratgerätes, das aus dem Werkstoff Al 99,5 besteht, mittels anodischer Oxidation unter Funkenentladung behandelt, wodurch die vorher metallische Oberfläche in eine nichtmetallische Oberfläche überführt wird. Nach der anodischen Oxidation in einem Badbehälter wird das Bratgerät aus dem Badbehälter entnommen, getrocknet und dann mit Hilfe des Plasmaspritzverfahrens eine Deckschicht aus Al₂ + TiO₂(3%) aufgespritzt. Diese Verschleißschicht wird anschließend mit einer PTFE-Emulsion antihaftversiegelt.

Das bekannte Verfahren ist daher relativ aufwendig, weil zum Erzeugen der Oxidschicht an der metallischen Oberfläche des Grundmaterials eine Badbehandlung erforderlich ist, die in eine Fließfertigung nur mit Schwierigkeiten integriert werden kann.

Der Erfindung liegt daher die Aufgabe zugrunde, ein Verfahren, ein Gerät sowie eine Vorrichtung der eingangs genannten Art dahingehend weiterzubilden, daß mit einfachen Mitteln eine deutlich verbesserte Langzeit-Korrosionsbeständigkeit gewährleistet werden kann.

Gemäß dem eingangs genannten Verfahren wird diese Aufgabe erfindungsgemäß dadurch gelöst, daß die Oxidschicht nach dem Aufbringen der Hartstoffschicht unterhalb derselben vor dem Aufbringen der Antihaftschicht erzeugt wird.

Weiterhin wird die der Erfindung zugrundeliegende Aufgabe gemäß der eingangs genannten Vorrichtung gelöst durch:
a) einen Tisch zum Auflegen des Gerätes;
b) eine im Tisch angeordnete Induktionsheizung; und
c) Mittel zum Zuführen von Sauerstoff zu der vom Tisch abgewandten Seite des Gerätes.

Schließlich wird die der Erfindung zugrundeliegende Aufgabe noch durch die Verwendung des atmosphärischen Oxidierens einer Oberfläche eines metallischen Körpers zum Erzeugen einer dichten Oxidschicht zwischen einem metallischen Boden eines Haus- oder Küchengerätes und einer darauf befindlichen, thermisch gespritzten Hartstoffschicht, die wiederum mit einer Antihaftschicht versehen ist, gelöst.

Durch die Erfindung wird mit überraschend einfachen Mitteln erreicht, daß die Langzeit-Korrosionsbeständigkeit des beschichteten Gerätes deutlich verbessert wird, weil die dichte Oxidschicht oberhalb des metallischen Körpers einen zuverlässigen und auch langfristig beständigen Korrosionsschutz darstellt. Die dichte Oxidschicht versiegelt nämlich den metallischen Körper unterhalb der Hartstoffschicht so perfekt, daß Sauerstoff, der durch eine im Langzeitgebrauch verletzte Antihaftschicht sowie durch die poröse Hartstoffschicht hindurchdringt, nicht bis zu dem metallischen Körper hindurchzudringen vermag. Auch sonstige aggressive Substanzen, die nach einem Langzeitgebrauch des Gerätes ihren Weg durch die Hartstoffschicht hindurch finden, werden durch die dichte Oxidschicht sicher vom metallischen Körper ferngehalten. Dabei erweist sich als besonders vorteilhaft, daß durch mechanische Belastung zwar die Antihaftschicht oberhalb der Hartstoffschicht beeinträchtigt werden kann, daß aber andererseits die Hartstoffschicht selbst einen überaus zuverlässigen mechanischen Schutz für die dichte Oxidschicht darstellt, so daß diese nur den chemischen Belastungen von zu ihr hindurchdringenden oxidierenden Substanzen, nicht jedoch mechanischen Belastungen standhalten muß. Auf diese Weise ist auch im Langzeitgebrauch sichergestellt, daß die korrosionsschützenden Eigenschaften der dichten Oxidschicht erhalten bleiben.

Bei der Erfindung macht man sich die Tatsache zunutze, daß eine thermisch gespritzte Hartstoffschicht von Hause aus ein poröses Gebilde ist. Man kann daher die Oxidschicht unterhalb der Hartstoffschicht in einfacher Weise dadurch erzeugen, daß man die oxidierenden Substanzen durch die poröse Hartstoffschicht hindurchdringen läßt, um dann im Übergangsbereich zwischen Hartstoffschicht und metallischem Körper die gewünschte dichte Oxidschicht zu erzeugen. Dies ist beim Herstellen der genannten Geräte von großem Vorteil, weil eine Fließfertigung möglich ist, bei der die dichte Oxidschicht in einem weiteren Arbeitsgang nach dem thermischen Spritzen und vor dem Aufbringen der Antihaftschicht vorgesehen werden kann.

Bei einer bevorzugten Ausgestaltung des erfindungsgemäßen Verfahrens wird als Metall eine Aluminium-Legierung, insbesondere eine Aluminium-Magnesium-Knetlegierung, verwendet.

Diese Maßnahmen haben den Vorteil, daß ein Werkstoff verwendet werden kann, wie er bei den hier einschlägigen Geräten, insbesondere Bratpfannen, vorteilhaft verarbeitet werden kann. Auch eignet sich eine derartige Legierung sehr gut dazu, mit einfachen Mitteln eine Oxidschicht an deren Oberfläche zu erzeugen.

Bei Ausführungsbeispielen des erfindungsgemäßen Verfahrens wird die Oxidschicht durch Erhitzen des Körpers in einer Sauerstoff enthaltenden Atmosphäre erzeugt.

Diese Maßnahme hat den Vorteil, daß sich die Oxidschicht fast "von selber" ausbildet, beispielsweise unter Ausnutzung des natürlichen Luftsauerstoffs. Es genügen daher in diesem Falle sehr einfache Vorrichtungen, um derartige Geräte zu beschichten.

Bei diesem Ausführungsbeispiel ist besonders bevorzugt, wenn der Körper mittels induktiven Heizens erhitzt wird.

Diese Maßnahme hat den Vorteil, daß der metallische Körper in kurzer Zeit hochgeheizt werden kann, ohne daß ein fremdes Medium als Wärmeträger auf den Körper einwirkt. Auf diese Weise ist es möglich, auch den Schritt des Erhitzens in eine schnell laufende Fließfertigung einzubinden.

Es ist ferner bei diesen Ausführungsbeispielen bevorzugt, wenn der Körper dünn und flach ausgebildet ist, ihn während des Erhitzens und Oxidierens zu pressen.

Diese Maßnahme hat zum einen den Vorteil, daß eine unerwünschte Verformung des dünnen und flachen Körpers vermieden wird. Wenn nämlich der metallische Körper z.B. aus einer Knetlegierung hergestellt ist, so steht der Körper nach seiner Herstellung unter einer Vorspannung, die bei einer anschließenden Erhitzung zu einer deutlichen Verformung führen würde. Andererseits sind derartige Verformungen bei Haus- und Küchengeräten äußerst unerwünscht. Wenn das Küchengerät nämlich z.B. eine Bratpfanne ist, so muß diese mit ihrem flachen und dünnen Boden vollflächig auf eine Elektroheizplatte aufliegen, um einen guten Wärmeübergang zu gewährleisten. Außerdem ist eine ebene Form des Pfannenbodens deswegen erwünscht, weil sich das Bratfett gleichmäßig auf dem Pfannenboden verteilen soll.

Weiterhin hat das gleichzeitige Erhitzen und Pressen den Vorteil, daß durch geeignete Einstellung des Preßdruckes eine bessere Haftung und/oder eine Verdichtung erzielt werden kann. Insbesondere dann, wenn die Oxidschicht - wie oben bereits angedeutet - nach dem Aufbringen der Hartstoffschicht erzeugt wird, kann durch das Pressen erreicht werden, daß die Hartstoffschicht in das Metall eingedrückt und/oder zugleich definiert verdichtet wird. Dies gelingt deswegen besonders gut, weil das erhitzte Metall wesentlich weicher als kaltes Metall ist und sich daher die erzeugten Schichten in das weiche Metall hineindrücken können.

Dies gilt insbesondere bei Ausführungsbeispielen der Erfindung, bei denen der Körper auf eine Temperatur kurz unterhalb der Erweichungstemperatur des Metalles erhitzt wird. Dies ist bei einem Körper aus einer Aluminium-Magnesium-Knetlegierung beispielsweise ein Temperaturbereich in der Größenordnung zwischen 400°C und 610°C.

Bei Weiterbildungen der erfindungsgemäßen Vorrichtung ist für den Fall eines im wesentlichen dünn ausgebildeten Gerätes (beispielsweise einer Bratpfanne) im Abstand vom Tisch ein verfahrbarer Stempel zum Anpressen des Gerätes an den Tisch vorgesehen.

Auf diese Weise wird in der bereits erläuterten Weise erreicht, daß der dünne und zumindest bereichsweise flache Körper gleichzeitig erhitzt und gepreßt wird.

Bei einer weiteren Fortbildung der erfindungsgemäßen Vorrichtung ist der Stempel an seiner am Gerät anliegenden Oberfläche mit Rillen versehen, in die Sauerstoff einbringbar ist.

Diese Maßnahme hat den Vorteil, daß im Wege einer sogenannten "Sauerstoffdusche" die gewünschte Oxidation der metallischen Oberfläche des Körpers beschleunigt wird. Die vorstehend genannten Maßnahmen machen sich dabei die Tatsache zunutze, daß sich auch ein an seiner Preßseite mit Rillen versehener Stempel gleichmäßig auf der Hartstoffschicht abstützen kann, ohne daß eine unerwünschte Deformation der Hartstoffschicht eintritt. Diese ist vielmehr in sich so stabil, daß selbst bei unterbrochener Preßfläche ein gleichmäßiger Druck entsteht. Es ist ferner ausreichend, den Sauerstoff oder die Sauerstoff enthaltende Atmosphäre lediglich über Rillen an der Preßseite des Stempels zu verteilen, weil sich infolge der Porosität der Hartstoffschicht der Sauerstoff dann von selbst gleichmäßig an der metallischen Oberfläche des Körpers verteilt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht eines Ausführungsbeispiels eines erfindungsgemäßen Küchengerätes, nämlich einer Bratpfanne, teilweise aufgebrochen und im Ausschnitt vergrößert dargestellt;
- Fig. 2: eine noch wesentlich weiter vergrößerte Schnittdarstellung durch einen Ausschnitt der Beschichtung der Pfanne gemäß Fig. 1; und
- Fig. 3: in zwei Figurenhälften zwei Ausführungsbeispiele einer erfindungsgemäßen Vorrichtung zum Beschichten eines metallischen Körpers eines Haus- oder Küchengerätes.

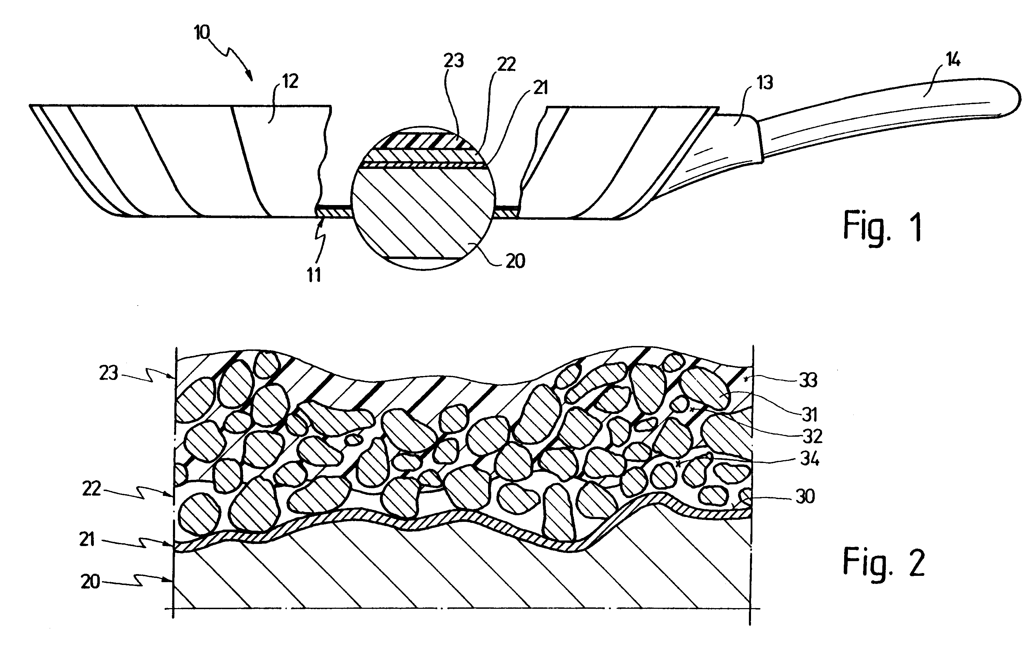

In Fig. 1 bezeichnet 10 insgesamt eine im wesentlichen herkömmlich aufgebaute Bratpfanne mit einem ebenen Boden 11, einer umlaufenden und ansteigenden Wand 12, einem Befestigungsflansch 13 sowie einem daran angeordneten Stiel 14.

Wie man aus dem stark vergrößerten Ausschnitt erkennen kann, besteht der Boden 11 aus einem Metallkörper 20, auf den eine dreilagige Beschichtung aufgebracht ist. Die Beschichtung besteht oberhalb des Metallkörpers 20 aus einer Oxidschicht 21, einer Hartstoffschicht 22 sowie einer Antihaftschicht 23.

Es darf an dieser Stelle angemerkt werden, daß die in Fig. 1 dargestellte Bratpfanne 10 nur ein Ausführungsbeispiel verkörpert. Die Erfindung ist daneben auch bei zahlreichen anderen Haus- und Küchengeräten einsetzbar, beispielsweise bei unterschiedlichen Küchengefäßen wie Backformen, Töpfen, Kesseln und dgl., ferner bei Bügeleisensohlen, Warmhalteplatten von Kaffeemaschinen, Ofenauskleidungen, Grillplatten und dgl.; kurzum bei allen Haus- und Küchengeräten, bei denen mechanisch stark beanspruchbare Oberflächen zugleich Antihafteigenschaften aufweisen sollen.

Die in Fig. 1 dargestellte Bratpfanne 10 ist eine metallische Bratpfanne, die vorzugsweise aus einer Aluminium-Legierung, insbesondere einer Aluminium-Magnesium-Knetlegierung hergestellt ist.

Fig. 2 zeigt in weiter stark vergrößertem Maßstab den Schichtenaufbau oberhalb des Metallkörpers 20.

Man erkennt, daß die Oxidschicht 21 als sehr dichte Schicht die Oberfläche des Metallkörpers 20 gleichmäßig und dicht überdeckt.

Oberhalb der Oberfläche 30 der Oxidschicht 21 befindet sich die Hartstoffschicht 22, die äußerst porös aufgebaut ist. Sie besteht im wesentlichen aus Hartstoffkörnern 31 mit Zwischenräumen 32, 34. In die oberen Zwischenräume 32 ist Antihaftstoff 33 der Antihaftschicht 23 eingedrungen, während die unteren Zwischenräume 34 oberhalb der Oberfläche 30 der Oxidschicht 21 unausgefüllt sind.

Zur Herstellung der Beschichtung gemäß Fig. 2 geht man folgendermaßen vor:
Der Metallkörper 20 wird zunächst in herkömmlicher Weise zwecks Reinigung vorbehandelt, beispielsweise durch Sandstrahlen und/oder eine entsprechende Wäsche.

Auf den so vorbehandelten Metallkörper 20 wird nun nach einem Ausführungsbeispiel der Erfindung zunächst die Hartstoffschicht 22 aufgetragen und zwar durch thermisches Spritzen, d.h. beispielsweise durch Flammspritzen, Plasmasprühen, Hochgeschwindigkeits-Plasmasprühen oder Detonations-Spritzen. Dabei wird ein Hartstoffmaterial, beispielsweise Aluminiumoxid oder Aluminiumoxid/Titanoxid oder ein Carbid in Pulverform stark erhitzt und auf die Oberfläche des Metallkörpers 20 mit hoher Geschwindigkeit aufgeschossen. Auf diese Weise bildet sich die in Fig. 2 deutlich erkennbare poröse Hartstoffschicht 22 aus.

Da die Hartstoffschicht 22 so porös ist, kann man nun erst nach ihrem Aufbringen die Oxidschicht 21 erzeugen. Hierzu ist es lediglich erforderlich, den Metallkörper 20 auf eine genügend hohe Temperatur zu erhitzen und zugleich den Metallkörper 20 mit der Hartstoffschicht 22 einer Sauerstoff enthaltenden Atmosphäre auszusetzen.

Im Falle einer Aluminium-Magnesium-Knetlegierung wird man die Temperatur des Metallkörpers 20 kurz unterhalb der Erweichungstemperatur einstellen, also im Bereich zwischen 400°C und 610°C. Setzt man nun den erhitzten Metallkörper 20 normaler atmosphärischer Luft aus oder mit Sauerstoff angereicherter Luft, so dringt Sauerstoff durch die poröse Hartstoffschicht 22 hindurch und erzeugt an der Oberfläche des Metallkörpers 20 die Oxidschicht 21. Die Oxidschicht 21 ist, da sie unmittelbar aus dem Metallkörper 20 heraus oxidiert wurde, von hoher Dichte.

Selbstverständlich kann man aber auch die Oxidschicht 21 zu Beginn der BeSchichtung auf dem vorbereiteten Metallkörper 20 erzeugen und erst danach die Hartstoffschicht 22 aufbringen, allerdings ist das zuerst genannte Verfahren bevorzugt.

Sobald nun auf die eine oder andere Weise auf dem Metallkörper 20 die Oxidschicht 21 und die Hartstoffschicht 22 angebracht sind, wird der Antihaftstoff 33 aufgebracht und zwar üblicherweise in Form eines dünnflüssigen Lackes, der vorzugsweise aus einem Fluorethylenpolymer, insbesondere Polytetrafluorethylen (PTFE) besteht. Der Antihaftlack dringt von oben in die poröse Hartstoffschicht 22 ein und wird dann durch Wärmebehandlung ausgehärtet, so daß sich letztendlich die in Fig. 2 dargestellte Struktur ergibt.

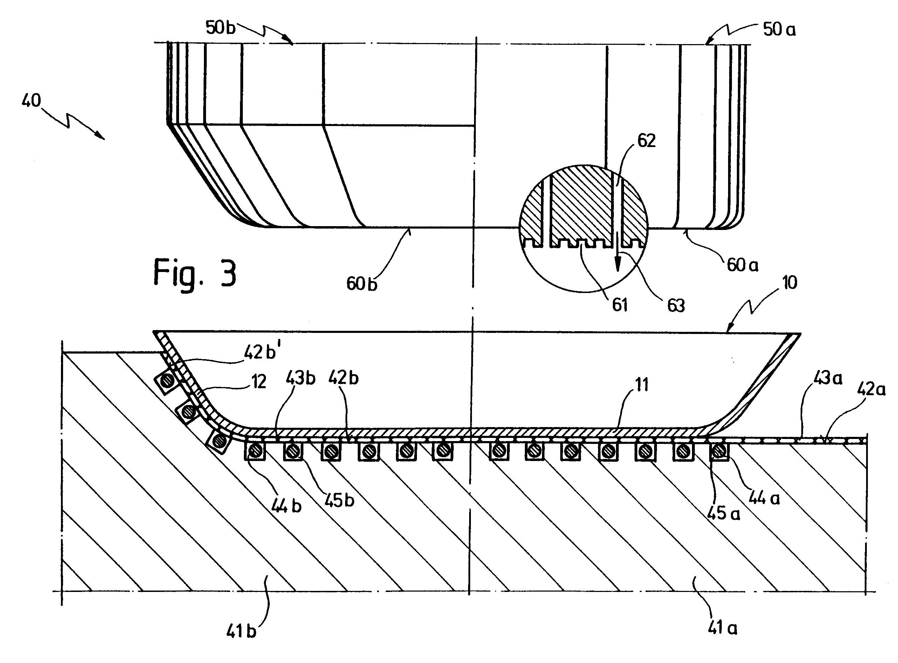

Um den Verbund von Oxidschicht 21 und Hartstoffschicht 22 zu erzeugen, kann nach einem Ausführungsbeispiel der Erfindung eine Vorrichtung eingesetzt werden, wie sie in zwei Varianten in der linken bzw. der rechten Hälfte von Fig. 3 dargestellt ist. Gleiche Elemente sind in Fig. 3 dabei mit gleichen Bezugszeichen versehen, wobei lediglich das Ausführungsbeispiel der rechten Hälfte durch das Hinzufügen eines "a" und das Ausführungsbeispiel der linken Hälfte von Fig. 3 durch Anfügen eines "b" gekennzeichnet ist.

Das Werkzeug 40 umfaßt einen Tisch 41 mit einer Oberfläche 42. Die Oberfläche 42 wird durch eine Auflage 43 gebildet.

Bei dem in der rechten Hälfte von Fig. 3 dargestellten Ausführungsbeispiel verlaufen Oberfläche 42a und Auflage 43a im wesentlichen plan, während bei dem in der linken Hälfte von Fig. 3 dargestellten Ausführungsbeispiel die Oberfläche 42 und die Auflage 43 in ihrer Formgebung an das nicht-ebene, zu beschichtende Gerät angepaßt sind, im dargestellten Fall also an die Bratpfanne 10 mit ihrem ebenen Boden 11 und der seitlich hochgezogenen Wand 12.

Die Auflage 43 besteht aus einem hochtemperaturstabilen Material, beispielsweise einer Asbestpappe oder einer Matte aus einem Asbest-Ersatzstoff. Die Auflage 43 überdeckt eine Induktionsheizung, die in die Oberfläche 42 eingelassen ist. Die Induktionsheizung besteht im wesentlichen aus einer Spiralleitung 44, die in eine entsprechend spiralförmig angelegte Nut 45 eingelegt ist. Auch hier gilt, daß bei dem in der rechten Hälfte von Fig. 3 dargestellten Ausführungsbeispiel die Spiralleitung 44a mit den Nuten 45a in einer einzigen gemeinsamen Ebene liegt, während bei dem in der linken Hälfte von Fig. 3 dargestellten Ausführungsbeispiel die Spiralleitung 44b mit der Nut 45b ebenfalls an die nicht-ebene Oberfläche 42b angepaßt ist, die im Bereich der umlaufenden Wand 12 der Bratpfanne 10 mit 42b' bezeichnet ist.

Das Werkzeug 40 umfaßt ferner einen Stempel 50, der in der Ausgangsstellung mit Abstand oberhalb des Tisches 41 angeordnet ist. Der Stempel 50 hat eine Unterseite 60, die als Preßfläche dient und in ihrer Formgebung 60a, 60b an die Form der Oberfläche 42a, 42b angepaßt ist. So ergreift die Preßfläche 60a in der rechten Hälfte von Fig. 3 nur den ebenen Boden 11 der Bratpfanne 10, während die kegelstumpfförmig ausgebildete Unterseite 60b in der linken Hälfte von Fig. 3 sowohl den ebenen Boden 11 wie auch die ansteigende Wand 12 der Bratpfanne 10 erfaßt.

In die Unterseite 60 sind Rillen 61 eingebracht, die kreuz und quer über die Unterseite 60 verlaufen. Die Rillen 61 sind mit Kanälen 62 verbunden, über die (nicht dargestellt) Sauerstoff oder eine Sauerstoff enthaltende Atmosphäre eingeblasen werden kann, wie mit einem Pfeil 63 dargestellt. Das System der Rillen 61 ist dabei so angelegt, daß sich der Sauerstoff möglichst gleichmäßig über die Unterseite 60 in den Rillen 61 verteilt.

Das Werkzeug 40 arbeitet wie folgt:
Die Bratpfanne 10, auf deren Metallkörper 20 bereits die Hartstoffschicht 22 aufgebracht ist, wird auf die Auflage 43 des Tisches 41 aufgelegt. Nun wird gleichzeitig die Induktionsheizung 44, 45 eingeschaltet und der Stempel 50 abgesenkt. Die Induktionsheizung 44, 45 erzeugt durch Wirbelströme im metallischen Boden 11 und ggf. der metallischen Wand 12 eine stark und schnell ansteigende Erwärmung, während zugleich der Stempel 50 den Körper der Bratpfanne 10 auf die Auflage 43 drückt. Ferner wird zu gleicher Zeit Sauerstoff über die Kanäle 62 und die Rillen 61 auf der Unterseite 60 des Stempels 50 verteilt.

Durch die schnelle Erhitzung wird das Metall, beispielsweise die Aluminiumlegierung, des Metallkörpers 20 bis nahe an den Erweichungspunkt heran erhitzt. Der Anpreßdruck des Stempels 50 bewirkt dabei, daß sich der Metallkörper 20, nämlich der Boden 11 und ggf. die Wand 12 nicht verformt, insbesondere nicht wirft. Der über die Kanäle 62 und die Rillen 61 verteilte Sauerstoff dringt nun durch die poröse Hartstoffschicht 42 bis zu der Oberfläche des Metallkörpers 20 vor. Die Hartstoffschicht 22 bewirkt dabei eine feine Verteilung des Sauerstoffs über die Oberfläche des Metallkörpers 20. Aufgrund der hohen Temperatur des Metallkörpers 20 reagiert dieser rasch mit dem Sauerstoff und es bildet sich die dichte und durchgehende Oxidschicht 21 zwischen Hartstoffschicht 22 und Metallkörper 20 aus.

Der fortwährende Anpreßdruck des Stempels 50 bewirkt dabei nicht nur, daß eine Verformung des Metallkörpers 20 verhindert wird, er bewirkt ferner, daß die Hartstoffschicht 22 je nach Höhe des Anpreßdruckes etwas mitsamt der Oxidschicht 21 in den weichen Metallkörper 20 eingedrückt und/oder verdichtet wird.

Der Stempel 50 wird nun wieder nach oben verfahren, damit die Bratpfanne 10 vom Tisch 41 abgenommen werden kann.

## Patentansprüche

1. Verfahren zum Beschichten eines metallischen Körpers (20) eines Haus- oder Küchengerätes (10), bei dem mittels thermischen Spritzens eine Hartstoffschicht (22) erzeugt und danach eine Antihaftschicht (23) auf die Hartstoffschicht (22) aufgebracht wird und ferner zwischen der Hartstoffschicht (22) und einer Oberfläche des Körpers (20) eine durch Oxidieren des den Körper (20) bildenden Metalles erzeugte Oxidschicht vorgesehen ist, dadurch gekennzeichnet, daß vor dem Aufbringen der Antihaftschicht die Oxidschicht (21) nach dem Aufbringen der Hartstoffschicht (22) unterhalb derselben erzeugt wird.

2. Verfahren nach Anspruch 1, dadurch gekennzeichnet, daß als Metall eine Aluminium-Legierung verwendet wird.

3. Verfahren nach Anspruch 2, dadurch gekennzeichnet, daß als Aluminium-Legierung eine Aluminium-Magnesium-Knetlegierung verwendet wird.

4. Verfahren nach einem oder mehreren der Ansprüche 1 bis 3, dadurch gekennzeichnet, daß die Oxidschicht (21) durch Erhitzen des Körpers (20) in einer Sauerstoff enthaltenden Atmosphäre erzeugt wird.

5. Verfahren nach Anspruch 4, dadurch gekennzeichnet, daß der Körper (20) mittels induktiven Heizens erhitzt wird.

6. Verfahren nach Anspruch 4 oder 5, dadurch gekennzeichnet, daß der Körper (20) dünn und flach ausgebildet ist und während des Erhitzens und Oxidierens gepreßt wird.

7. Verfahren nach einem oder mehreren der Ansprüche 4 bis 6, dadurch gekennzeichnet, daß der Körper (20) auf eine Temperatur kurz unterhalb der Erweichungstemperatur des Metalles erhitzt wird.

8. Verfahren nach Anspruch 7, dadurch gekennzeichnet, daß bei einem Körper (20) aus einer Aluminium-Magnesium-Knetlegierung der Körper (20) auf eine Temperatur im Bereich zwischen 400°C und 610°C erhitzt wird.

9. Vorrichtung zum Beschichten eines metallischen Körpers (20) eines Haus- oder Küchengerätes (10), bei der mittels thermischen Spritzens eine Hartstoffschicht (22) erzeugt und danach eine Antihaftschicht (23) auf die Hartstoffschicht (22) aufgebracht wird und ferner zwischen der Hartstoffschicht (22) und einer Oberfläche des Körpers (20) eine weitere Schicht vorgesehen ist, gekennzeichnet durch:
a) einen Tisch (41) zum Auflegen des Gerätes (10),
b) eine im Tisch (41) angeordnete Induktionsheizung (44, 45); und
c) Mittel (61 bis 63) zum Zuführen von Sauerstoff zu der vom Tisch (41) abgewandten Seite des Gerätes (10).

10. Vorrichtung nach Anspruch 9, dadurch gekennzeichnet, daß das Gerät (10) im wesentlichen dünn ausgebildet ist und daß im Abstand vom Tisch (41) ein verfahrbarer Stempel (50) zum Anpressen des Gerätes (10) an dem Tisch (41) vorgesehen ist.

11. Vorrichtung nach Anspruch 10, dadurch gekennzeichnet, daß der Stempel (50) an seiner am Gerät (10) anliegenden Oberfläche (60) mit Rillen (61) versehen ist, in die Sauerstoff einbringbar ist.

12. Verwendung des atmosphärischen Oxidierens einer Oberfläche eines metallischen Körpers (20) zum Erzeugen einer dichten Oxidschicht (21) zwischen einem metallischen Boden (11) eines Haus- oder Küchengerätes (10) und einer darauf befindlichen, thermisch gespritzten Hartstoffschicht (22), die wiederum mit einer Antihaftschicht (23) versehen ist.

## Claims

1. Method of coating a metal body (20) of a domestic or kitchen utensil (10), wherein by means of thermal injection a coating of hard material (22) is produced and thereafter a non-stick coating (23) is applied to the coating (22) of hard material, and in addition an oxide layer produced by oxidation of the material forming the body (20) is provided between the coating (22) of hard material and one surface of the body (20), characterised in that before the non-stick coating (21) is applied, the oxide coating (21) is produced under the coating (22) of hard material after the latter has been applied.

2. Method according to claim 1, characterised in that as a metal an aluminium alloy is used.

3. Method according to claim 2, characterised in that as an aluminium alloy an aluminium-magnesium wrought alloy is used.

4. Method according to one or more of claims 1 to 3, characterised in that the oxide coating (21) is produced by heating the body (20) in an oxygen-containing atmosphere.

5. Method according to claim 4, characterised in that the body (20) is heated inductively.

6. Method according to claim 4 or 5, characterised in that the body (20) is thin and flat and is pressed during heating and oxidation.

7. Method according to one or more of claims 4 to 6, characterised in that the body (20) is heated to a temperature slightly below the melting point of the metal.

8. Method according to claim 7, characterised in that if the body (20) is composed of an aluminium-magnesium wrought alloy, the body (20) is heated to a temperature in the range between 400°C and 610°C.

9. Apparatus for coating a metal body (20) of a domestic or kitchen utensil (10), wherein by means of thermal injection a coating of hard material (22) is produced and thereafter a non-stick coating (23) is applied to the coating (22) of hard material, and in addition a further layer is provided between the coating (22) of hard material and one surface of the body (20), characterised by
a) a table (41) on which to lay the utensil (10),
b) an induction heater (44, 45) disposed in the table (41); and
c) means (61 to 63) of supplying oxygen to the side of the utensil (10) remote from the table (41).

10. Apparatus according to claim 9, characterised in that the utensil (10) has a substantially thin form and in that a movable press (50) for pressing the utensil (10) on the table (41) is provided at a distance from the table (41).

11. Apparatus according to claim 10, characterised in that the press (50) is provided on its surface (60) abutting the utensil (10) with grooves (61) into which oxygen can be introduced.

12. Use of atmospheric oxidation of one surface of a metal body (20) for generating a dense oxide coating (21) between a metal base (11) of a domestic or kitchen utensil (10) and a thermally injected coating (22) of hard material thereon, which is in turn provided with a non-stick coating (23).

## Revendications

1. Procédé pour revêtir le corps métallique (20) d'un ustensile de ménage ou de cuisine (10), selon lequel, par projection à chaud, une couche de matériau dur (22) est obtenue, une couche anti-adhérence (23) étant ensuite appliquée sur la couche de matériau dur (22), une couche d'oxyde étant en outre obtenue entre la couche de matériau dur (22) et une surface du corps (20) par oxydation du métal constituant le corps (20), caractérisé en ce que, avant l'application de la couche anti-adhérence, la couche d'oxyde (21) est réalisée après la réalisation de la couche de matériau dur (22), en dessous de celle-ci.

2. Procédé selon la revendication 1, caractérisé en ce que le métal utilisé est un alliage d'aluminium.

3. Procédé selon la revendication 2, caractérisé en ce que l'alliage d'aluminium utilisé est un alliage corroyé de magnésium et d'aluminium.

4. Procédé selon une ou plusieurs des revendications 1 à 3, caractérisé en ce que la couche d'oxyde (21) est obtenue par chauffage du corps (20) dans une atmosphère contenant de l'oxygène.

5. Procédé selon la revendication 4, caractérisé en ce que le corps (20) est chauffé par chauffage inductif.

6. Procédé selon l'une des revendications 4 ou 5, caractérisé en ce que le corps (20) a une configuration mince et plate et en ce qu'il est soumis à une pression au cours des opérations de chauffage et d'oxydation.

7. Procédé selon une ou plusieurs des revendications 4 à 6, caractérisé en ce que le corps (20) est chauffé à une température légèrement inférieure à la température de ramollissement du métal.

8. Procédé selon la revendication 7, caractérisé en ce que dans le cas d'un corps (20) en alliage corroyé de magnésium et d'aluminium, le corps (20) est chauffé à une température comprise entre 400°C et 610°C.

9. Dispositif pour revêtir le corps métallique (20) d'un ustensile de ménage ou de cuisine (10), dans lequel, par projection à chaud, une couche de matériau dur (22) est obtenue, une couche anti-adhérence (23) étant ensuite appliquée sur la couche de matériau dur (22), une autre couche étant en outre prévue entre la couche de matériau dur (22) et une surface du corps (20), caractérisé en ce qu'il est prévu :
a) une table (41) pour poser l'ustensile (10),
b) un chauffage a induction (44, 45) disposé à l'intérieur de la table (41) ; et
c) des moyens (61 à 63) pour amener de l'oxygène sur le côté de l'ustensile (10) situé a l'opposé de la table (41).

10. Dispositif selon la revendication 9, caractérisé en ce que l'ustensile (10) est de configuration essentiellement mince, et que, à une certaine distance de la table (41) un poinçon mobile (50) est prévu pour presser l'ustensile (10) contre la table (41).

11. Dispositif selon la revendication 10, caractérisé en ce que le poinçon (50) comporte, sur sa surface (60) appliquée sur l'ustensile (10), des sillons (61) dans lesquels peut être envoyé de l'oxygène.

12. Utilisation de l'oxydation atmosphérique pour l'oxydation d'une surface d'un corps métallique (20), pour obtenir une couche d'oxyde (21) continue entre un fond métallique (11) d'un ustensile de ménage ou de cuisine (10) et une couche de matériau dur (22) déposé par projection à chaud sur ledit fond, ladite couche comportant elle-même une couche anti-adhérence (23).
